# FASCICULE DE BREVET EUROPEEN

(11) **EP 4 003 714 B1**
(45) Date de publication et mention de la délivrance du brevet: **24.12.2025**
(21) Numéro de dépôt: 20758269.3
(22) Date de dépôt: 22.07.2020
(51) Int. Cl.: B29C 70/48, B29C 33/02, B29C 35/02, B29C 35/00, B29C 35/16, B29C 33/34, B29C 45/00, B29C 45/72, B29C 70/44, B29C 31/00

(54) **PROCÉDÉ DE FABRICATION D'UNE PIÈCE EN MATÉRIAU COMPOSITE UTILISANT UN MOULE A PAROIS MINCES**
VERFAHREN ZUR HERSTELLUNG EINES WERKSTÜCKS AUS VERBUNDMATERIAL UNTER VERWENDUNG EINER DÜNNWANDIGEN FORM
METHOD FOR MANUFACTURING A PART MADE OF COMPOSITE MATERIAL USING A THIN-WALLED MOULD

(30) Priorité: 22.07.2019 FR 1908297
(43) Date de publication de la demande: 01.06.2022
(73) Titulaire: ARKEMA FRANCE, 92800 Puteaux (FR)
(72) Inventeur: HOCHSTETTER, Gilles, CS 10478 F - 92907 PARIS LA DEFENSE Cedex (FR)
(74) Mandataire: Bandpay & Greuter
(86) Numéro de dépôt international: PCT/FR2020/051340
(87) Numéro de publication internationale: WO 2021/014100

(56) Documents cités:
- EP-A1- 3 357 666
- WO-A1-2014/064377
- US-A1- 2005 042 324

## Description

### DOMAINE DE L'INVENTION

La présente invention concerne un procédé de fabrication d'une pièce en matériau composite renforcé avec des fibres par moulage à partir d'une composition réactive, ce procédé mettant en œuvre un moule à parois minces. L'invention porte également sur le moule à parois minces et son utilisation pour la fabrication de matériau composite.

### ARRIERE-PLAN TECHNIQUE

Il est connu de fabriquer des produits en matériau composite par moulage. Les procédés de moulage par transfert de résine ou « *Resin Transfer Molding »,* notés RTM et les procédés de moulage par transfert de résine avec compression, notés CRTM, encore dénommé ICM (*Injection Compression Molding*) sont généralement utilisés. Ces procédés utilisent une presse régulée en température. Généralement, ce type de procédé de moulage est isotherme. C'est notamment le cas avec les résines thermodurcissables. Cependant dans le cas des résines thermoplastiques, il peut être intéressant d'utiliser un procédé anisotherme, pour faciliter l'imprégnation des fibres en réduisant la viscosité de la composition réactive ou du polymère utilisé pour imprégner les fibres. Dans le cas d'un procédé réactif, un cycle anisotherme est également utile pour accélérer la cinétique de polymérisation en augmentant la température du procédé de moulage. Les fibres de renfort sont alors disposées dans le moule de la presse. Ce moule est fermé, puis monté en température, s'il n'était pas préalablement chauffé. Le polymère ou la composition réactive à base du ou des précurseurs de ce polymère est injecté à l'état fondu dans le moule. Ensuite, le moule est redescendu en température par refroidissement. Puis, la pièce obtenue est démoulée. Ainsi, la presse est équipée d'un système de chauffage, utilisant généralement des résistances électriques ou un système de fluide chaud, et d'un système de refroidissement, utilisant généralement des circuits d'eau froide ou d'air comprimé. EP3357666A1 divulgue un procédé et dispositif pour fabriquer une pièce en matériau polymère.

Il est possible d'injecter une composition de monomères ou bien de prépolymères. Il peut être intéressant d'utiliser une composition réactive à base d'un ou plusieurs pré-polymères d'une masse suffisante. Une masse suffisante signifie que leur masse permet de réduire la durée de la polymérisation nécessaire pour atteindre la masse du polymère final ou permet de réduire la quantité de sous-produits de polymérisation, lorsque la chimie d'allongement de chaîne utilisée dégage des sous-produits de polymérisation. Les prépolymères peuvent être semi-cristallins et lorsque leur masse molaire est suffisamment importante, leur température de fusion est supérieure à la température de cristallisation du polymère final. Les prépolymères peuvent être amorphes et lorsque leur masse molaire est suffisamment importante, leur température de mise en œuvre est supérieure à la température de transition vitreuse du polymère final. Dans ces cas particuliers, il sera nécessaire de réaliser un cyclage thermique de façon à refroidir le composite en deçà de la température d'injection du polymère ou de la composition réactive pour pouvoir le démouler. Par exemple, dans le cas des polyamides, la polymérisation peut se faire par polycondensation. La cinétique de cette polymérisation est relativement lente, et les temps de polymérisation proches de la minute ne se rencontrent qu'à des températures supérieures à 250°C.

Ainsi, il est parfois nécessaire de réaliser un cycle de moulage anisotherme également pour pouvoir polymériser rapidement, et notamment au-delà de 250°C, *a minima* au-delà de la température de fusion, notée Tf, du ou des précurseurs du mélange réactif, lorsqu'ils sont semi-cristallins et au-delà de leur température de transition vitreuse notée Tg lorsqu'ils sont amorphes, puis de refroidir le moule afin de pouvoir démouler la pièce, à une température en-deçà de la température de cristallisation notée Tc pour les polymères semi-cristallins ou de la Tg pour les polymères amorphes.

Il existe un réel besoin de raccourcir la durée de ces procédés de moulage, afin d'augmenter les cadences de production. Ainsi, l'un des buts recherchés est de raccourcir la durée de l'étape de chauffage du moule et de raccourcir la durée de l'étape de refroidissement du moule. Un cycle de moulage de l'ordre de la minute est particulièrement recherché.

Par ailleurs, il existe également un besoin de réduire le coût énergétique de ce type de procédé.

Il est possible de résoudre ce problème en augmentant le nombre de circuits de chauffage et le nombre de canaux de refroidissement au sein de la presse. Toutefois, le remplacement d'ancienne presse par de nouvelles presses plus sophistiquées représente un coût non négligeable. De plus, cette solution ne résout pas le problème du coût énergétique élevé de ce procédé.

Par ailleurs, il est important d'obtenir des pièces moulées de bonne qualité, c'est-à-dire dont la composition est homogène.

### RESUME DE L'INVENTION

Ce problème technique est résolu par l'utilisation d'un moule amovible comprenant des parois minces. Les revendications 1, 11, 13 et 14 définissent l'invention. Le procédé de fabrication d'une pièce en matériau composite, ledit matériau comprenant des fibres de renfort et une matrice polymère, le procédé comprenant les étapes successives suivantes :
- installation dans une matrice montée sur une presse d'un moule à parois minces fermé dans lequel ont été disposées des fibres de renfort,
- fermeture de la presse,
- injection à l'état fondu dans le moule à parois minces fermé d'un polymère ou d'une composition réactive comprenant au moins un prépolymère, au moins un monomère ou leurs mélange,
- maintien de la fermeture de la presse pendant tout ou partie de la polymérisation de la matrice polymère, lorsqu'une composition réactive est utilisée,
- ouverture de la presse
- retrait du moule à parois minces de la presse, tout en maintenant une pression résiduelle comprise entre 0,7 et 10 bars, de préférence entre 0,7 et 5 bars, dans ledit moule,
- refroidissement du moule sous ladite pression résiduelle.

Le procédé selon l'invention présente l'avantage de réduire le coût énergétique de la fabrication. L'étape de refroidissement étant réalisée à l'extérieur de la presse, la matrice montée sur la presse peut rester à une température constante. La presse utilisée selon le procédé selon l'invention ne subit plus les montées et les diminutions en température. En outre, le temps de cycle de production, qui correspond au temps passé sous la presse, peut être fortement réduit, puisqu'une partie de la polymérisation, puis du refroidissement se fait en temps masqué, hors presse. De plus, les pièces produites par ce procédé présentent une composition, et notamment une cristallinité, identique sur l'ensemble de la pièce.

L'invention porte également sur le moule à parois minces mis en œuvre dans le procédé selon l'invention et sur son utilisation pour la fabrication de matériau composite.

### BREVE DESCRIPTION DES FIGURES

La figure 1 est un schéma de certaines étapes du procédé selon l'invention.
La figure 2 est une vue en coupe d'un moule à parois minces selon l'invention.
La figure 3 est une vue en perspective d'une pièce moulée selon les exemples.

### DESCRIPTION DE MODES DE REALISATION DE L'INVENTION

D'autres caractéristiques, aspects, objets et avantages de la présente invention apparaîtront encore plus clairement à la lecture de la description qui suit.

Il est par ailleurs précisé que les expressions "compris entre... et..." et "de... à..." utilisées dans la présente description doivent s'entendre comme incluant chacune des bornes mentionnées.

L'invention est maintenant décrite plus en détails et de façon non limitative dans la description qui suit.

Le procédé selon l'invention met en œuvre un moule à parois minces. Par moule à parois minces, on entend au sens de la présente invention un moule comportant deux pièces de formes complémentaires. L'épaisseur des parois est telle que le moule supporte une pression de moulage résiduelle supérieure à la pression de vapeur saturante de l'eau à la température d'injection de la composition réactive.

### Etapes du procédé

Le procédé selon l'invention comprend une étape d'installation dans une matrice montée sur une presse d'un moule à parois minces en position fermée, dans lequel ont été disposées des fibres de renfort. Ensuite, la presse est fermée sur ce moule. La presse est maintenue en position fermée pendant un temps suffisant, de manière à ce que le moule soit porté à la température de la matrice montée sur la presse. Généralement, la durée de la montée en température du moule est courte, car le moule est conçu de telle sorte que le contact avec la matrice montée sur la presse confère rapidement aux parois minces du moule sa température. La composition réactive ou le polymère est ensuite injecté dans le moule. La presse est maintenue en position fermée, pour permettre à la matrice polymère d'imprégner les fibres de renfort. Dans le cas de l'utilisation d'une composition réactive, tout ou partie de la polymérisation pourra également se faire pendant le temps de maintien du moule à parois minces sous la presse Dans ce cas, la durée de cette étape est fonction de la composition réactive utilisée. La presse est ensuite ouverte de manière à pouvoir libérer le moule. Après retrait de la presse, le moule est mis à refroidir avant l'étape de démoulage.

Chacune des étapes du procédé va être décrite en détails ci-après.

### Pose des fibres de renfort

Les fibres de renfort peuvent être soit disposées dans le moule à parois minces par une simple action de dépôt, soit disposées sous la forme d'une préforme.

Selon un mode de réalisation particulier de l'invention, les fibres de renfort peuvent être façonnées sous forme de préforme. Les fibres de renfort sont alors mélangées avec une résine d'adhésion, autrement appelée liant de préforme, puis moulées, éventuellement par compression dans un moule adapté ou bien directement dans le moule à parois minces selon l'invention, afin de réaliser une préforme. Cette dernière présente l'avantage d'être plus facilement manipulable. Cette préforme peut être ensuite facilement disposée dans le moule à parois minces, si elle ne l'est pas déjà.

Selon les fibres de renfort utilisées et la nature du polymère ou de la composition réactive utilisé pour le moulage, l'étape de préformage peut être effectuée à une température comprise entre 80°C et 320°C. Le liant de préforme est choisi de manière à résister à la température d'injection appliquée.

Cette étape éventuelle de préformage peut être réalisée sur un dispositif circulaire disposé sur un axe de rotation. De préférence, l'axe de rotation du dispositif circulaire est parallèle à celui de la presse. Le dispositif circulaire peut être disposé à proximité de la presse. Par exemple, un carrousel peut être utilisé.

Selon un mode de réalisation particulier de l'invention, un bras robotisé peut être utilisé pour disposer la préforme dans le moule à parois minces, lorsque celle-ci a été réalisée dans un autre moule.

Tout au long du procédé de moulage, c'est-à-dire de l'installation du moule dans la presse jusqu'au démoulage, le moule à parois minces est maintenu en position fermé.

Ce maintien en position fermée peut être effectué soit par un système de tirage sous vide, soit par un système de fermeture mécanique conventionnel.

De préférence, le moule à parois minces est équipé d'un système de tirage sous vide, qui exerce une pression résiduelle comprise entre 0,7 et 10 bars, de préférence comprise entre 0,7 et 5 bars. Avantageusement, ladite pression résiduelle est de 0,7 à 0,9 bar.

Avantageusement, lorsque la pression résiduelle est de 0,7 à 0,9 bar, la polymérisation est effectuée par polyaddition ou par polymérisation radicalaire ou par substitution nucléophile.

Avantageusement, lorsque le moule à parois minces comprend un système mécanique de fermeture, alors ladite pression résiduelle est de 0,9 à 10 bars, préférentiellement de 0,9 à 5 bars.

### Eventuelle étape préalable de dégazage avant installation du moule dans la presse

Le procédé selon l'invention peut comprendre une étape de dégazage dans le moule à parois minces, avant l'étape d'installation du moule dans la presse. Cela permet de maintenir fermé le moule à parois minces pendant son transfert sous la presse. Cela permet également l'élimination dans le moule à parois minces de tout ou partie de l'air et/ou de toute autre substance, dont la présence pourrait être préjudiciable à la fabrication de la pièce en matériau composite. En effet, un dégazage des fibres dans le moule à parois minces fermé réalisé avant le début de l'injection du polymère ou de la composition réactive permet de réduire les porosités liées à des bulles d'air.

Selon un mode de réalisation particulier de l'invention, le moule à parois minces est pourvu d'un système de dégazage, c'est-à-dire d'un système d'aspiration des gaz présents dans l'enceinte du moule, comportant au moins une pompe et un ou plusieurs évents. Dans le cas de l'utilisation d'un système chimique polymérisant par polycondensation, le système de tirage sous vide est ensuite fermé pour permettre l'injection du polymère ou de la composition réactive dans les conditions limitant la polymérisation. C'est également le cas lorsque le polymère ou la composition réactive est suffisamment fluide à la température d'injection pour risquer de s'introduire dans les évents du moule servant au dégazage et de les boucher.

Le dégazage peut être effectué avec une dépression allant de 0,010 à 0,950 bar, de préférence de 0,700 à 0,900 bar, par rapport à la pression atmosphérique.

### Installation du moule à parois minces dans la presse

Le procédé comprend une étape d'installation dans la matrice montée sur la presse d'un moule à parois minces fermé, dans lequel ont été disposées des fibres de renfort.

Selon un autre mode de réalisation particulier de l'invention, un bras robotisé peut être utilisé pour disposer le moule à parois minces dans la matrice de la presse de moulage. La combinaison d'un carrousel et d'un bras robotisé est également possible.

### Fermeture de la presse

Ensuite, une fois le moule à parois minces disposé dans la matrice de la presse, celle-ci est fermée. La presse est maintenue en position fermée pendant une durée suffisante pour que la matrice de la presse confère aux parois du moule sa température. L'épaisseur des parois minces du moule est telle que la conduction thermique entre la matrice de la presse et les parois du moule est élevée.

### Eventuelle étape préalable de dégazage après l'installation du moule dans la presse

Le procédé selon l'invention peut comprendre une étape de dégazage dans le moule à parois minces, avant l'étape d'injection. L'application de ce dégazage permet l'élimination dans le moule à parois minces de tout ou partie de l'air et/ou de toute autre substance, dont la présence pourrait être préjudiciable à la fabrication de la pièce en matériau composite. En effet, un dégazage des fibres dans le moule à parois minces fermé, réalisé avant le début de l'injection du polymère ou de la composition réactive, permet de réduire les porosités liées à des bulles d'air. Le moule à parois minces est, de préférence, équipé d'un système de tirage sous vide permettant d'effectuer ce dégazage. Après dégazage du moule, le système de tirage sous vide est fermé pour permettre l'injection du polymère ou de la composition réactive.

### Injection du polymère ou de la composition réactive

Ensuite, le procédé selon l'invention comporte une étape d'injection à l'état fondu dans le moule à parois minces fermé d'un polymère ou d'une composition réactive comprenant au moins un prépolymère, au moins un monomère ou leurs mélanges. Avantageusement, l'étape d'injection a une durée inférieure à 15 secondes. De préférence, la durée de cette étape va de 1 à 10 secondes. Dans le cas de l'utilisation d'une composition réactive, une durée courte d'injection permet de limiter la polymérisation simultanée ou ultérieure de la composition réactive pendant cette étape, ce qui améliore l'imprégnation des fibres.

Dans un mode de réalisation particulier correspondant au RTM, l'injection du polymère ou de la composition réactive dans le moule fermé et l'imprégnation des fibres de renfort sont simultanées. Dans ce mode de réalisation, après un dégazage initial éventuel, l'injection et l'imprégnation sont effectuées en l'absence de dégazage, c'est-à-dire qu'aucune dépression n'est appliquée dans les évents du système de dégazage.

Selon un autre mode de réalisation correspondant au CRTM, l'injection du polymère ou de la composition réactive est effectuée dans un moule fermé comportant une chambre de compression ouverte, de préférence en l'absence de dégazage pendant l'injection, après un dégazage initial éventuel, puis l'imprégnation des fibres de renfort par la composition réactive est effectuée essentiellement lors de la compression induite par la fermeture de la chambre de compression, en l'absence de dégazage pendant ladite compression, à une pression exercée sur le moule de préférence de 10 à 70 bars, encore plus préférentiellement de 40 à 60 bars. Cette pression améliore l'imprégnation des fibres par la composition réactive.

Selon un mode de réalisation particulier utilisant une composition réactive, la température appliquée dans le moule lors de l'étape de polymérisation est supérieure à la température de fusion Tf des prépolymères, de préférence supérieure d'au moins 5°C.

Selon un autre mode de réalisation utilisant une composition réactive, la température de polymérisation est supérieure à la température de fusion du prépolymère ayant la température de fusion la plus élevée, de préférence supérieure d'au moins 5°C.

De préférence, la matrice de la presse est maintenue à une température constante comprise entre 200 et 350°C, notamment entre 230 et 320°C, et plus particulièrement entre 250 et 320°C.

### Etape de maintien de la fermeture du moule

Selon la composition réactive utilisée, la durée de cette étape de maintien de la fermeture de la presse sera fonction du taux de conversion des prépolymères en polymères ou des monomères en prépolymères puis en polymère. De préférence, la durée de cette étape correspond au temps nécessaire pour doubler le poids moléculaire des prépolymères.

Selon la composition réactive utilisée, il est possible d'envisager le fait que la polymérisation soit amorcée lors de l'injection dans le cas du RTM ou de l'injection compression dans le cas du CRTM de la composition puis se poursuive lors du refroidissement. Ce mode de réalisation permet de réduire le temps passé sous presse et ainsi d'augmenter considérablement la cadence de production des pièces sans augmenter considérablement le coût.

Lors de l'étape de maintien, un dégazage peut être appliqué, de préférence avec une pression de maintien inférieure à 5 bars. Ce dégazage peut être effectué par application d'une dépression allant de 0,010 à 0,950 bar, de préférence de 0,700 à 0,900 bar, par rapport à la pression atmosphérique. Les évents du système placés sur le moule ont un diamètre suffisamment petit et la composition réactive est suffisamment visqueuse pour que se crée au niveau des évents une perte de charge empêchant la composition réactive de passer à travers les évents et de sortir du moule.

### Retrait du moule de la presse

La presse est ensuite ouverte. Le moule à parois minces est ensuite retiré de la presse. Au cours de ces deux étapes, le moule à parois minces est maintenu en position fermé par un vide permettant une dépression de 0,700 à 0,900 bar.

### Etape de maintien de la fermeture du moule hors de la presse et refroidissement

Le procédé comprend ensuite une étape de maintien de la fermeture du moule hors de la presse pour éventuellement finir la polymérisation de la matrice polymère à partir de la composition réactive. Cette pression est également nommée « *pression de maintien* ». Avantageusement, cette pression est inférieure à la pression appliquée pendant l'étape d'imprégnation. De manière particulièrement préférée, cette pression est supérieure à la pression de vapeur saturante de l'eau dans le cas de la polycondensation. Par « *la pression de vapeur saturante de l'eau* », on entend la pression de vapeur saturante de l'eau dissoute, dans la matrice du composite obtenue après polymérisation de la composition réactive, à la température à laquelle a eu lieu cette polymérisation. L'application d'une pression de maintien supérieure à la pression de vapeur saturante de l'eau permet d'éviter que l'eau formée comme sous-produit lors de la polymérisation ne forme des bulles, ce qui dégraderait la qualité du matériau composite. De préférence, la pression appliquée pendant l'étape de maintien de la fermeture vaut de 3 à 7 bars, encore plus préférentiellement de 4 à 6 bars.

Selon un mode de réalisation particulier, le dégazage est appliqué pendant sensiblement toute la durée de l'étape de maintien de la fermeture du moule, c'est-à-dire hors presse. La pression appliquée pendant l'étape de polymérisation doit être toutefois suffisamment faible pour que la composition réactive ne passe pas à travers les évents lors de l'application du dégazage

La durée de l'étape de maintien de la fermeture du moule hors presse est fonction de la cinétique de la polymérisation de la composition réactive. Cette durée est de préférence inférieure à 15 min, de préférence inférieure à 10 min, plus préférentiellement inférieure à 5 min.

### Refroidissement

Le moule à parois minces est laissé à refroidir par conduction thermique avec l'air environnant au travers de ses parois minces, par conduction thermique avec un environnement froid, au sein d'une chambre froide, ou encore dans un conformateur froid, la température environnante pouvant aller jusqu'à une température inférieure à la température de cristallisation (Tc) du polymère formé.

Selon un autre mode de réalisation, le refroidissement consiste à disposer le moule à parois minces dans un conformateur, dit froid, régulé à une température inférieure ou égale à la température de cristallisation Tc du polymère formé sous une pression résiduelle comprise entre 0,7 et 10 bars, de préférence comprise entre 0,7 et 5 bars.

Avantageusement, l'étape de refroidissement est réalisée avec un conformateur froid.

### Démoulage

La pièce en matériau composite est ensuite démoulée de son moule à parois minces.

### Pose et Dépose

Selon un mode de réalisation préféré de l'invention, les étapes de pose et de dépose du moule à parois minces, avant et/ou après l'étape d'injection du polymère ou de la composition réactive, peuvent être réalisées à l'aide de bras robotisés. En effet, le procédé selon l'invention permettant de maintenir la matrice de la presse à une température constante relativement élevée, l'utilisation de bras robotisés évite toute mise en danger des opérateurs manipulant ces machines.

Comme pour les étapes préalables à la pose du moule dans la presse, il est possible d'utiliser un dispositif circulaire disposé sur un axe de rotation permettant le transfert des moules de la presse vers, par exemple, le conformateur froid pour l'étape de refroidissement.

Selon un mode de réalisation particulier de l'invention, il est possible d'envisager un seul dispositif circulaire, sur lequel seraient disposés les moules ne comportant que les fibres de renfort (avant moulage) et les moules comportant le matériau composite à refroidir (après moulage).

### Matrice polymère

Le matériau composite comprend des fibres de renfort et une matrice polymère.

Selon un mode de réalisation, la matrice polymère peut être choisie parmi :
- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),
et leurs mélanges.

De préférence, la matrice polymère est choisie parmi les matrices polyamide, polyester, polyamide-imide, polyamide-éther, polyacrylique, polyoléfines, polysulfure de phénylène, polyéther-imide.

Selon un mode de réalisation avantageux, la matrice polymère est une matrice polyamide.

Selon un mode de réalisation, la matrice polymère est une matrice thermoplastique.

Selon un mode de réalisation particulier, la matrice polymère est un polymère semi-cristallin. Un polymère semi-cristallin confère au matériau composite, par rapport aux polymères amorphes, des performances mécaniques significativement améliorées, notamment à chaud, telles que la résistance au fluage ou à la fatigue.

Avantageusement, la matrice polymère a une température de transition vitreuse Tg d'au moins 80°C, de préférence d'au moins 90°C, plus préférentiellement d'au moins 100°C et de manière encore plus préférée d'au moins 120°C. Une température de transition vitreuse supérieure ou égale à 80°C assure de bonnes propriétés mécaniques au composite sur toute la plage de température d'utilisation, par exemple jusqu'à 90°C pour l'éolien, jusqu'à 100°C pour l'automobile et jusqu'à 120°C pour l'aéronautique.

Selon un mode de réalisation encore plus avantageux, la matrice polymère est semi-cristalline et a une température de fusion Tf supérieure à 200°C, de préférence supérieure à 220°C. Une température de fusion supérieure à 200°C permet une compatibilité avec les traitements par cataphorèse, en particulier dans l'industrie automobile. De préférence, la température de fusion Tf est inférieure ou égale à 320°C et encore plus préférentiellement inférieure à 290°C. Une température de fusion supérieure à 320°C nécessite une mise en œuvre du matériau composite à des températures plus élevées, ce qui impose des contraintes de matériel de moulage et de système de chauffe associé et entraine une surconsommation énergétique. La mise en œuvre à de telles températures élevées augmente les risques de dégradation thermique du polymère ayant pour conséquence la dégradation des propriétés de la matrice finale et donc du matériau composite et de la pièce composite finale.

Selon un mode de réalisation, la matrice polymère a une température de cristallisation Tc telle que l'écart entre la température de fusion Tf de la matrice et de cristallisation Tc, Tf-Tc, ne dépasse pas 60°C, de préférence ne dépasse pas 50°C et plus particulièrement ne dépasse pas 40°C.

Selon une variante, l'enthalpie de cristallisation de la matrice polymère est comprise de 10 à 55 J/g.

Selon une variante particulière, l'enthalpie de cristallisation de la matrice polymère est comprise de 40 J/g à 55 J/g, de préférence de 20 à 35 J/g.

Les performances mécaniques ou la tenue mécanique à chaud du matériau composite peuvent être évaluées par la variation de la contrainte à la rupture en flexion dans le sens des fibres (ou en anglais, *« maximum strength at 0°* ») entre la température ambiante (23°C) et 100°C, une bonne tenue mécanique à chaud correspondant à un maintien d'au moins à 75 % des performances mécaniques, en termes de contrainte à la rupture, par rapport à celles à la température ambiante (23°C).

Selon un mode de réalisation de l'invention, la matrice polymère est préparée par polymérisation en masse de la composition réactive comprenant au moins un prépolymère, au moins un monomère ou un mélange de ceux-ci, à l'état fondu.

Avantageusement, la matrice polymère a une masse molaire moyenne en nombre supérieure à 10000 g/mol, de préférence allant de 10000 à 40000 g/mol, encore plus préférentiellement de 12000 à 30000 g/mol.

Selon un mode de réalisation, la matrice polymère est une matrice polyamide qui comprend des unités issues des monomères suivants : le diacide téréphtalique, le diacide isophtalique, l'acide adipique, l'acide sébacique, l'acide dodécanoique, la 1,10-décaméthylène diamine, la 1,6-hexaméthylène diamine, la 2-méthyl pentaméthylène diamine (MPMD), un mélange de 2,2,4 et 2,4,4-triméthylhexanediamine (TMD), la 2-méthyloctanediamine (8M), la nonanediamine, la 4,4'-diaminodicyclohexylmethane (PACM) la m-xylylène diamine (MXD), la 1,3-bis (aminométhyle) cyclohexyle (1,3 BAC), la 1,4-bis (aminométhyle) cyclohexyle (1,4 BAC), le caprolactame, l'amino-11 acide undécanoïque, l'amino-12 acide laurique et/ou le lauryl lactame.

Selon un mode de réalisation avantageux, la matrice polymère est une matrice polyamide qui est choisie parmi le PA 11/10T, le PA5T/10T, PA 11/5T/10T, PA 6T/10T, PA 11/6T/10T, le PA MPMDT/10T, le PA MDXT/10T, le PA BACT/10T, le PA 11/BACT, le PA 11/BACT/10T, le PA 6/6T, le PA 66/6T, le PA 6I/6T, le PA MPMDT/6T, le PA 6T/10T, le PA 8MT/9T, le PA TMDT/10T, le PA PACM12, le PA BACT/6T, le PA 11/BACT/6T, PA BACT/10T/6T, le PA MXD6 et le PA MXD10, la BAC étant avantageusement la 1,3 BAC.

### Composition réactive

La composition réactive comprend un ou plusieurs monomères susceptibles de réagir sur lui-même ou entre eux ou un ou plusieurs prépolymères susceptibles de réagir entre eux au cours de l'étape de polymérisation, pour fournir la matrice décrite ci-dessus.

Dans un mode de réalisation avantageux, le ou les prépolymères sont des prépolymères polyamides.

Chaque prépolymère est lui-même un polymère (homopolymère ou copolymère), présentant une masse molaire moyenne en nombre inférieure à celle de la matrice. Selon un mode de réalisation, le ou les prépolymères compris dans la composition réactive ont une masse molaire moyenne en nombre allant de 500 à 10000 g/mol, de préférence de 750 à 6000 g/mol, plus préférentiellement de 750 à 3000 g/mol.

Selon un mode de réalisation, lorsqu'au moins deux prépolymères sont utilisés, ceux-ci présentent sensiblement la même masse molaire moyenne en nombre. Par « *sensiblement la même masse molaire moyenne en nombre* », on entend que la différence entre les deux masses est inférieure à 30%.

Selon un premier mode de réalisation, la composition comprend au moins un premier prépolymère polyamide A1 porteur de deux fonctions amine et au moins un second prépolymère polyamide A2 porteur de deux fonctions carboxy coréactives avec les fonctions amine du premier prépolymère polyamide. Les squelettes des prépolymères A1 et A2 peuvent être de même nature (c'est-à-dire avoir une même composition en unités répétées), ou de nature différente. De préférence, ils sont de même nature.

Selon un deuxième mode de réalisation, la composition comprend au moins un prépolymère polyamide A3 porteur d'une fonction amine et d'une fonction carboxy coréactives entre elles. Dans ce mode de réalisation, la composition peut comprendre un seul prépolymère polyamide porteur d'une fonction amine et d'une fonction carboxy coréactives entre elles, ou bien plusieurs prépolymères différents, chacun porteur d'une fonction amine et d'une fonction carboxy. Dans ce dernier cas, les squelettes des différents prépolymères A3 peuvent être de même nature (les différents prépolymères A3 se distinguant alors uniquement par une masse molaire moyenne en nombre distincte), ou de nature différente.

Selon un troisième mode de réalisation, la composition comprend au moins un prépolymère A1 porteur de deux fonctions amine (tel que décrit ci-dessus) et au moins un prépolymère polyamide A2 porteur de deux fonctions carboxy (tel que décrit ci-dessus).

Selon un quatrième mode de réalisation, la composition comprend au moins un prépolymère A1 porteur de deux fonctions amine (tel que décrit ci-dessus) ou au moins un prépolymère polyamide A2 porteur de deux fonctions carboxy (tel que décrit ci-dessus) et au moins un allongeur de chaînes de formule Y-A'-Y, dans laquelle :
- Y est un groupement porteur d'une fonction réactive par polyaddition ou polycondensation avec au moins une fonction dudit prépolymère A1 et/ou A2 ;
- A' est un biradical hydrocarboné.

Lorsque le prépolymère est porteur de deux fonctions NH₂ (fonctions amines):
- soit l'allongeur de chaîne Y-A'-Y est tel que
   --Y est choisi parmi les groupements : maléimide, isocyanate éventuellement bloqué, oxazinone et oxazolinone, de préférence oxazinone et oxazolinone et
   --A' est un espaceur carboné ou radical carboné choisi parmi :
      ----une liaison covalente entre deux fonctions (groupements) Y dans le cas où Y est un groupement oxazinone ou oxazolinone, ou
      ----une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant un poids moléculaire de 14 à 200 g.mol⁻¹ ;
- soit l'allongeur de chaîne Y-A'-Y est tel que Y est un groupement caprolactame et A' peut être un radical carbonyle tel que le carbonyl biscaprolactame ou A' peut être un téréphtaloyle ou un isophtaloyle, ou les diépoxydes choisis parmi les diépoxydes aliphatiques, cycloaliphatiques ou aromatiques éventuellement substitués.
   Comme exemples de diépoxydes aliphatiques, on peut citer des diglycidyl éthers de diols aliphatiques, comme diépoxydes aromatiques, des diglycidyl éthers de bisphénol A tel que le diglycidyl éther de bisphénol A (DGEBA) et comme diépoxydes cycloaliphatiques, des diglycidyl éthers de diols cycloaliphatiques ou du bisphénol A hydrogéné. De manière plus générale, comme exemples convenables de diépoxydes selon l'invention, on peut citer les bisphenol A diglycidyl éther (DGEBA) et son dérivé hydrogéné (cycloaliphatique), bisphénol F diglycidyl éther, le tétrabromo bisphénol A diglycidyl éther ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn < 500, polypropylène glycol diglycidyl éther de Mn < 500, polytétraméthylène glycol diglycidyl éther de Mn < 500, résorcinol diglycidyl éther, néopentylglycol diglycidyl éther, bisphenol A polyéthylène glycol diglycidyl éther de Mn < 500, bisphénol A polypropylèneglycol diglycidyl éther de Mn < 500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2 cyclohexane dicarboxylate et les mélanges des diépoxydes cités.
- soit ledit allongeur de chaîne Y-A'-Y porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges, A' étant un espaceur (radical) carboné tel que défini ci-dessus.

Lorsque le prépolymère est porteur de deux fonctions COOH (fonctions carboxy), ledit allongeur de chaîne Y-A'-Y est tel que :
-Y est choisi parmi les groupements : oxazoline, oxazine, imidazoline ou aziridine, comme le 1, 1'-iso- ou téré- phtaloyl-bis (2-methyl aziridine), ou les diépoxydes choisi parmi les diépoxydes aliphatiques, cycloaliphatiques ou aromatiques éventuellement substitués. Comme exemples de diépoxydes aliphatiques, on peut citer des diglycidyl éthers de diols aliphatiques, comme diépoxydes aromatiques, des diglycidyl éthers de bisphénol A tel que le diglycidyl éther de bisphénol A (DGEBA) et comme diépoxydes cycloaliphatiques, des diglycidyl éthers de diols cycloaliphatiques ou du bisphénol A hydrogéné. De manière plus générale, comme exemples convenables de diépoxydes selon l'invention, on peut citer les bisphenol A diglycidyl éther (DGEBA) et son dérivé hydrogéné (cycloaliphatique), bisphénol F diglycidyl éther, le tétrabromo bisphénol A diglycidyl éther ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn < 500, polypropylène glycol diglycidyl éther de Mn < 500, polytétraméthylène glycol diglycidyl éther de Mn < 500, résorcinol diglycidyl éther, néopentylglycol diglycidyl éther, bisphenol A polyéthylène glycol diglycidyl éther de Mn < 500, bisphénol A polypropylèneglycol diglycidyl éther de Mn < 500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2 cyclohexane dicarboxylate et les mélanges des diépoxydes cités.
-A' est un espaceur (radical) carboné tel que défini ci-dessus.

Dans l'ensemble des énoncés ci-dessus, A' peut notamment représenter un biradical alkylène tel que -(CH₂)ₘ- avec m allant de 1 à 14 et de préférence de 2 à 10 ou un biradical cycloalkylène et/ou arylène substitué ou non substitué, comme les arylènes benzéniques, tels que les phénylènes o-, m-, p- ou les arylènes naphtaléniques.

Selon un mode de réalisation, la composition réactive est préparée par mélange d'au moins deux prépolymères.

De préférence, le procédé comprend une étape préliminaire de chauffage du ou des prépolymères, jusqu'à une température supérieure à la température de fusion des prépolymères. De préférence, la température de chauffage appliquée vaut de 200 à 350°C, notamment de 230 à 320°C, et plus particulièrement de 250 à 320°C.

De préférence, au moins deux prépolymères sont utilisés, auquel cas le procédé comprend une étape de mélange des prépolymères à l'état fondu, par exemple au moyen d'un mélangeur statique, d'un mélangeur dynamique, ou d'un mélangeur de type RIM (en anglais, « *Reactive Injection Molding* ») pour former la composition destinée à être injectée dans le moule.

Les prépolymères (notamment polyamides) peuvent être préparés de manière connue de l'homme du métier par polymérisation à partir de monomères respectifs, la polymérisation pouvant être interrompue, lorsque la masse molaire souhaitée est atteinte, par exemple par un contrôle de la pression d'eau (avancement de la réaction) et/ou des quantités de monomères. Les prépolymères A1 et A2 porteurs de deux fonctions amine ou de deux fonctions carboxy extrémales peuvent être par exemple obtenus en utilisant un excès de monomère diamine, respectivement un excès de monomère diacide.

La fabrication de tels prépolymères réactifs est par exemple décrite dans le document WO 2014/064375.

De préférence, les prépolymères contenus dans la composition réactive et la matrice polymère obtenue par polymérisation de ladite composition réactive ont la même composition en unités issues des monomères a), b) et optionnellement c).

Selon un mode de réalisation particulier, les prépolymères A1 et/ou A2 ou le prépolymère A3 comprennent des unités issues des monomères : a) acide téréphtalique, b1) 1,10-décaméthylène diamine et b2) MPMD ou MXD.

Selon un autre mode de réalisation particulier, les prépolymères A1 et/ou A2 ou le prépolymère A3 comprennent des unités issues des monomères : a) acide téréphtalique, b1) 1,10-décaméthylène diamine et b2) 1,3-bis (aminométhyle) cyclohexyle (1,3 BAC), 1,4-bis (aminométhyle) cyclohexyle (1,4 BAC) ou un mélange de ceux-ci, en particulier 1,3-bis (aminométhyle) cyclohexyle (1,3 BAC).

Selon un autre mode de réalisation particulier, les prépolymères A1 et/ou A2 ou le prépolymère A3 comprennent des unités issues du monomère c), ce dernier étant choisi parmi l'amino-11 acide undécanoïque, l'amino-12 acide laurique et le lauryl lactame.

Selon un mode de réalisation plus particulier, les prépolymères A1 et/ou A2 ou le prépolymère A3 comprennent des unités issues des monomères : a) acide téréphtalique, b1) 1,10-décaméthylène diamine, b2) 1,6-hexaméthylène diamine ou MPMD ou MXD ou 1,3 BAC ou 1,4 BAC et c) amino-11 acide undécanoïque ou amino-12 acide laurique ou lauryl lactame.

Selon un mode de réalisation encore plus particulier, les prépolymères A1 et/ou A2 ou le prépolymère A3 comprennent des unités issues des monomères : a) acide téréphtalique, b1) 1,10-décaméthylène diamine, b2) 1,6-hexaméthylène diamine ou MPMD ou MXD ou 1,3 BAC ou 1,4 BAC et c) amino-11 acide undécanoïque.

Selon un mode de réalisation encore plus particulier, les prépolymères A1 et/ou A2 ou le prépolymère A3 comprennent des unités issues des monomères : a) acide téréphtalique, b1) 1,6-hexaméthylène diamine, b2) MPMD ou MXD ou 1,3 BAC ou 1,4 BAC et c) amino-11 acide undécanoïque.

Selon un mode de réalisation encore plus particulier, les prépolymères A1 et/ou A2 ou le prépolymère A3 comprennent des unités issues des monomères : a) acide téréphtalique, b1) 1,10-décaméthylène diamine, b2) 1,6-hexaméthylène diamine et c) amino-11 acide undécanoïque.

Selon un autre mode de réalisation particulier, les prépolymères A1 et/ou A2 ou le prépolymère A3 comprennent des unités issues des monomères : a) acide téréphtalique, b1) 1,10-décaméthylène diamine, b2) 1,6-hexaméthylène diamine et c) lauryl lactame.

Selon un mode de réalisation encore plus particulier, les prépolymères A1 et/ou A2 ou le prépolymère A3 comprennent des unités issues des monomères : a) acide téréphtalique, b1) 1,6-hexaméthylène diamine, b2) MPMD ou MXD ou 1,3 BAC ou 1,4 BAC et c) lauryl lactame.

La composition réactive peut également comprendre des monomères, lesdits monomères étant précurseurs desdits prépolymères ci-dessus cités.

La composition réactive peut comprendre au moins une nanocharge d'origine carbonique. De préférence, la nanocharge est choisie parmi : le noir de carbone, les graphènes, les nanofibrilles de carbone et les nanotubes de carbone.

La composition réactive peut comprendre un ou plusieurs autres additifs.

Les additifs peuvent être un additif qui absorbe un rayonnement UV, infra-rouge (IR), micro-onde ou induction. Un tel additif peut être utilisé pour réchauffer le matériau composite ou la préforme ou la pièce en matériau composite, avant par exemple, une opération de transformation complémentaire, en particulier un thermo-estampage ou un surmoulage.

Les additifs peuvent également être un additif spécifique tel que des stabilisants thermiques, en particulier ces stabilisants sont des antioxydants contre la thermo-oxydation et/ou la photo-oxydation du polymère de la matrice thermoplastique et sont des stabilisants organiques ou minéraux.

L'expression « *stabilisant organique* » ou plus généralement une « *combinaison de stabilisants organiques* », désigne un antioxydant primaire de type phénol, un antioxydant secondaire de type phosphite, par exemple des phosphites liquides de type doverphos^{®}, et voire éventuellement d'autres stabilisants comme un HALS, ce qui signifie Hindered Amine Light Stabiliser ou stabilisant lumière de type amine encombrée (par exemple le Tinuvin 770 de la société Ciba), un anti-UV (par exemple le Tinuvin 312 de la société Ciba), un stabilisant phénolique ou à base de phosphore. On peut également utiliser des antioxydants de type amine tel le Naugard 445 de la société Crompton ou encore des stabilisants polyfonctionnels tel le Nylostab S-EED de la société Clariant.

Le stabilisant organique présent peut être choisi, sans que cette liste soit restrictive, parmi :
-les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes, l'ADK Stab AO-80 de la société Adeka Palmarole,
-les stabilisants à base de phosphore, comme les phosphites, par exemple l'irgafos 168 de la société Ciba,
-un absorbeur UV, tel le Tinuvin 312 de la société Ciba, ou l'oxyde de Titane TiO2
-un HALS, comme précédemment mentionné,
-un stabilisant de type amine, tel le Naugard 445 de la société Crompton, ou encore de type amine encombrée tel le Tinuvin 770 de la société Ciba,
-un stabilisant polyfonctionnel tel le Nylostab S-EED de la société Clariant.

On peut bien évidemment envisager un mélange de deux, ou plus, de ces stabilisants organiques.

L'expression « *stabilisant minéral* » désigne un stabilisant à base de cuivre ou à base d'un oxyde métallique tel que décrit dans le document US 2008/0146717. A titre d'exemple de tels stabilisants minéraux, on peut citer les halogénures et les acétates de cuivre ou les oxydes de fer tels que FeO, Fe₂O₃, Fe₃O₄ ou un mélange de ceux-ci. Accessoirement, on peut considérer éventuellement d'autres métaux tel l'argent, mais ceux-ci sont connus pour être moins efficaces.

Ces stabilisants minéraux sont plus particulièrement employés, lorsque les structures doivent avoir une résistance thermique améliorée à long terme dans l'air chaud, notamment pour des températures supérieures ou égales à 100°C, voire supérieures ou égales à 120°C, car ils tendent à empêcher les coupures de chaînes polymériques.

Plus particulièrement, par « *stabilisant à base de cuivre* », on entend un composé comprenant au moins un atome de cuivre, notamment sous forme ionique, ou ionisable, par exemple sous forme de complexe.

Le stabilisant à base de cuivre peut être choisi parmi le chlorure cuivreux, le chlorure cuivrique, le bromure cuivreux, le bromure cuivrique, l'iodure cuivreux, l'iodure cuivrique, l'acétate cuivreux et l'acétate cuivrique. On peut citer les halogénures, les acétates d'autres métaux tels l'argent en association avec le stabilisant à base de cuivre. Ces composés à base de cuivre sont typiquement associés à des halogénures de métaux alcalins, en particulier le potassium. Un exemple bien connu est le mélange de Cul et KI, où le ratio Cul:Kl est typiquement compris de 1:5 à 1:15. Un exemple d'un tel stabilisant est le Polyad P201 de la société Ciba.

On trouvera de plus amples détails sur les stabilisants à base de cuivre dans le document US 2,705,227. Plus récemment, sont apparus des stabilisants à base de cuivre tel les cuivres complexés comme les Bruggolen H3336, H3337, H3373 de la société Brüggemann.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (Cul/KI).

L'additif peut également être un modifiant choc, avantageusement constitué par un polymère présentant un module de flexion inférieur à 100 MPa mesuré selon la norme ISO 178 et de température de transition vitreuse Tg inférieure à 0°C (mesurée selon la norme 11357-2:2013 au niveau du point d'inflexion du thermogramme DSC), en particulier une polyoléfine, couplé ou non avec un Peba (polyéther bloc amide) ayant un module de flexion < 200 MPa.

La polyoléfine du modifiant choc peut être fonctionnalisée ou non fonctionnalisée ou être un mélange d'au moins une polyoléfine fonctionnalisée et/ou d'au moins une polyoléfine non fonctionnalisée.

Les additifs peuvent être aussi des agents ignifugeants sans halogène, tels que décrits dans le document US 2008/0274355 et notamment un sel métallique choisi parmi un sel métallique de l'acide phosphinique et un sel métallique de l'acide diphosphinique, un polymère contenant au moins un sel métallique de l'acide phosphinique, un polymère contenant au moins un sel métallique de l'acide diphosphinique ou du phosphore rouge, un oxyde d'antimoine, un oxyde de zinc, un oxyde de fer, un oxyde de magnésium ou des borates métalliques tels qu'un borate de zinc ou encore des pyrophosphates de mélamine et des cyanurates de mélamine. Ils peuvent également être des agents ignifugeants halogénés tels qu'un polystyrène bromé ou polybromé, un polycarbonate bromé ou un phénol bromé.

Avantageusement, l'additif est choisi parmi un antioxydant, un stabilisant à la chaleur, un absorbeur d'UV, un stabilisant à la lumière, un modifiant choc, un lubrifiant, une charge inorganique, un agent ignifugeant, un agent nucléant, notamment une charge minérale telle que du talc, et un colorant.

Les nanocharges et additifs peuvent être ajoutés au(x) polymère(s) ou au(x) prépolymère(s) à l'état fondu pour former le polymère ou la composition réactive avant injection de celui-ci ou celle-ci dans le moule.

### Fibres de renfort

Les fibres de renfort utilisées dans le procédé selon l'invention peuvent être sélectionnées parmi les fibres minérales, de préférence de verre, de carbone ou de basalte, en particulier de verre ou de carbone ou parmi les fibres synthétiques, de préférence les fibres d'aramides ou de polyaryl éther cétones, ou leurs mélanges.

Avantageusement, les fibres ont une longueur telle que le rapport L/D soit supérieur à 1000, de préférence supérieur à 2000, L étant la longueur moyenne des fibres et D leur diamètre moyen, déterminés par des méthodes bien connues de l'homme du métier, notamment par microscopie.

Les fibres peuvent représenter de 45 à 80 % en volume du matériau composite, de préférence de 50 à 70 %.

### Moule à parois minces

L'invention a également pour objet un moule comportant deux pièces, de préférence de forme complémentaire, destinées à être assemblées, caractérisé en ce qu'il se constitue
-d'une première pièce comportant une rainure sur tout le pourtour de la pièce,
-d'une seconde pièce comportant une nervure en saillie sur tout le pourtour de la pièce,
les positions de la rainure et de la nervure étant choisies de manière à ce qu'elles s'emboîtent lorsque le moule est en position fermée,
- au moins l'une des pièces comporte au moins un orifice, présentant un axe perpendiculaire à la surface de la pièce,
- un joint est positionné dans la rainure de la première pièce,
- les pièces sont d'une épaisseur supportant une pression de moulage résiduelle supérieure à la pression de vapeur saturante de l'eau à la température d'injection de la composition réactive,
- les pièces présentant des propriétés de conduction thermiques.

De préférence, la pression de moulage résiduelle pouvant être supportée par les pièces est comprise de 0,7 à 5 bars.

Le moule comporte des orifices, présentant un axe perpendiculaire à la surface de la pièce. Ces orifices sont communément appelés des points d'injection. Ils permettent l'injection du polymère ou de la composition réactive à l'état fondu à l'intérieur du moule. Le nombre d'orifices dans la ou les pièces du moule est fonction de la surface de la ou des pièces. Les deux pièces du moule, c'est-à-dire la pièce inférieure et la pièce supérieure peuvent être munies d'au moins un point d'injection.

Le moule est équipé d'un système de tirage sous vide permettant de le maintenir en position fermée, lorsqu'il est hors de la presse. De préférence, le système de tirage sous vide permet une dépression de 0,7 bar à 0,9 bar.

Le moule peut être équipé d'un système mécanique permettant de le maintenir en position fermée, lorsqu'il est hors de la presse. Ce système mécanique permet de résister à une pression interne comprise entre 0,7 bar et 10 bars, de préférence 0,7 et 5 bars.

Selon un mode de réalisation particulier de l'invention, le moule à parois minces est pourvu d'un système de dégazage, c'est-à-dire d'aspiration des gaz présents dans l'enceinte du moule, comportant au moins une pompe et un ou plusieurs évents débouchant dans l'enceinte du moule.

Selon un mode de réalisation particulier de l'invention, la première pièce comportant la rainure et le joint est équipée d'un canal de refroidissement permettant de refroidir le joint. Ce canal de refroidissement peut comporter un liquide froid, ou bien être relié à un système de refroidissement utilisant de l'eau froide ou de l'air comprimé.

De préférence, le moule à parois minces est en un matériau conducteur de chaleur permettant de conduire au maximum la chaleur de la presse à la composition réactive injectée à l'état fondu dans le moule.

De préférence, la conductivité thermique (λ) des parois est supérieure ou égale à 10 W.m⁻¹.K⁻¹, de préférence comprise entre 0,1 et 10 W.m⁻¹.K⁻¹, plus particulièrement comprise entre 0,3 et 1 W.m⁻¹.K ¹.

Les mesures de conductivité thermique des matériaux sont réalisées suivant la technologie HOT DISK telle que détaillée dans la norme ISO 22007-2.

Selon un mode de réalisation spécifique de l'invention, le moule à parois minces est réalisé en acier.

Le moule peut également comprendre un ou des moyens de prise ou de saisie, permettant une manutention aisée du moule.

De préférence, le moule selon l'invention comprend :
-une première pièce comportant une rainure sur tout le pourtour de la pièce, un joint positionné dans la rainure et un canal de refroidissement permettant de refroidir le joint positionné dans la rainure de la première pièce,
-une seconde pièce comportant une nervure en saillie sur tout le pourtour de la pièce,
   les positions de la rainure et de la nervure étant choisies de manière à ce qu'elles s'emboîtent lorsque le moule est en position fermée,
-au moins l'une des pièces comporte au moins un orifice, présentant un axe perpendiculaire à la surface de la pièce,
-les pièces étant d'une épaisseur supportant une pression de moulage résiduelle supérieure à la pression de vapeur saturante de l'eau à la température d'injection de la composition réactive,
- les pièces présentant des propriétés de conduction thermiques,
   le moule étant muni
-d'un système de dégazage et
-d'un système de tirage sous vide ou d'un système de fermeture mécanique.

D'autres buts, avantages et caractéristiques ressortiront de la description qui va suivre, donnée à titre d'exemple purement illustratif et faite en référence aux dessins annexés sur lesquels :

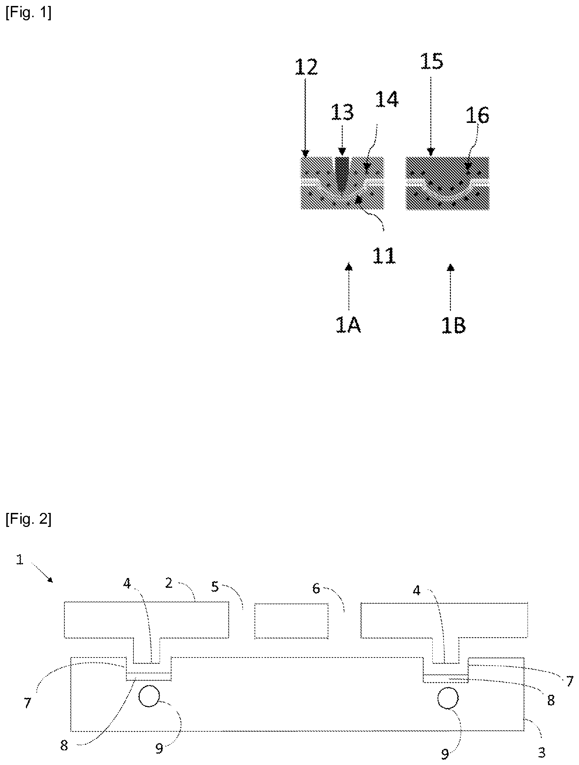

La figure 1 est un schéma de certaines étapes du procédé selon l'invention. Les étapes d'injection du polymère ou de la composition réactive : étape 1A et de refroidissement du moule à parois mince : étape 1B y sont représentées.

Selon le procédé selon l'invention, un moule à parois minces contenant des fibres de renfort est installé dans une matrice montée sur une presse. A l'étape notée 1A, est représentée une presse 12 comportant des circuits de chauffage 14 et un moyen 13 pour injecter la composition réactive. Un moule à parois mince 11 reçoit la composition réactive à l'état fondu. La presse est maintenue en position fermée pendant tout ou partie de la polymérisation de la matrice polymère. La presse est ensuite ouverte. Le moule à parois mince est retiré. A l'étape 1B, le moule à parois minces est placé dans un conformateur froid 15, comportant des circuits de refroidissement 16 pour être refroidi. Le moule à parois minces est ensuite démoulé.

La figure 2 illustre un mode de réalisation d'un moule à parois minces conforme à l'invention. Le moule 1 est constitué de la pièce 2, constituant la partie supérieure du moule 1 et de la pièce 3, constituant la partie inférieure du moule 1. La pièce 2 comporte une nervure en saillie 4 sur tout le pourtour de la pièce. La pièce 2 comporte également deux points d'injection 5 et 6, au travers desquels est injecté le polymère ou la composition réactive. La pièce 3 comporte une rainure 7, présente sur tout le pourtour de la pièce 3. Un joint 8 est positionné dans la rainure 7. Ce joint a pour fonction d'assurer l'étanchéité du moule 1. La pièce 3 comporte également à proximité du joint 8 se situant dans la rainure 7 un système de refroidissement. Le système de refroidissement permet d'allonger la durée de vie des joints. Un tube illustré par les orifices 9 permet d'assurer une circulation d'eau froide ou d'air comprimé.

L'invention porte également sur l'utilisation du moule à parois minces tel que décrit ci-dessus pour la fabrication de matériau composite.

L'invention porte enfin sur un dispositif circulaire disposé sur un axe de rotation comportant plusieurs zones de stockage de forme identique, ladite forme étant complémentaire de la forme d'une pièce d'un moule conformément à la revendication 11.

D'autres buts et avantages de la présente invention apparaîtront à la lecture des exemples suivants donnés à titre nullement limitatif.

### EXEMPLES

### Exemple 1 comparatif :

Une préforme fibreuse est introduite dans un moule de CRTM, installé sur une presse permettant d'appliquer une pression de 50 bars sur le moule.

La composition réactive utilisée est un mélange de prépolymères PA 11/10T/6T à terminaison acides et PA11/10T/6T à terminaison amine, en un ratio 50/50, de masse molaire 2500g/mol et de viscosité 1 Pa.s à 300°C. La température de fusion des pré-polymères est de 265°C et la température de cristallisation du polymère final est de 230°C.

Le cycle thermique appliqué pour le moulage va de 220°C à 300°C, l'amplitude thermique du cycle est donc de 80°C. Un palier de 1 minute à 300°C est effectué. L'injection des pré-polymères est réalisée à 300°C, au début du palier de 1 minute. Le temps de cycle visé est de 2 minutes, ce qui signifie que toutes les 2 minutes, la pièce est démoulée et une nouvelle préforme est introduite dans le moule.

En d'autres termes, les pré-polymères sont injectés à 300°C, la température est maintenue à 300°C pendant une minute, puis la presse descend en température à 220°C, pendant une durée de 30s. La pièce est démoulée. Puis la presse remonte en température à 300°C, pendant une durée de 30s, pour réaliser un autre cycle.

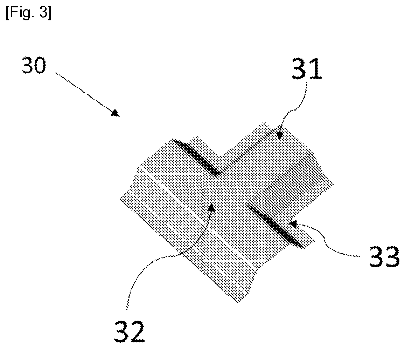

La pièce, dont la forme est présentée sur la figure 3, a donc été conçu dans une presse intégrant un système de chauffage et de refroidissement permettant un moulage en 2 minutes avec un cycle présentant une amplitude thermique de 80°C.

Une puissance de 250 kW pour le chauffage et de 160 kW pour le refroidissement sont nécessaires pour effectuer ce cycle.

En outre, des essais de moulage utilisant une préforme instrumentée de thermocouples ont montré que le contrôle de la température d'un point à l'autre du moule est très insatisfaisant et qu'un écart de plus de 20°C peut être observé d'un point à l'autre du moule lors du cycle thermique. Ainsi, le régime stationnaire thermique n'est jamais atteint dans le moule. De plus, le cycle thermique est trop rapide pour atteindre l'équilibre thermique.

Par ailleurs, des prélèvements ont été faits en différents endroits de la pièce composite moulée et des mesures de masse moléculaire ont été effectuées par RMN (cf tableau 1).

La figure 3 représente une vue en perspective d'une pièce moulée 30 selon l'exemple 1. Les emplacements 31, 32 et 33 représentent les endroits où ont été prélevés les échantillons analysés. Les résultats montrent, que les masses molaires sont différentes dans ces différentes Ainsi, les variations de température rencontrées d'un point à l'autre du moule conduisent à des différences dans l'avancement de la réaction de polymérisation *in situ.*

Enfin, il a été observé que la cristallisation de la résine dans le composite n'est pas complète, ce qui se traduit par une enthalpie de cristallisation de 17kJ/mol en moyenne contre 32kJ/mol pour ce type de polymère lorsqu'il est totalement cristallisé, mesurée par DSC. Cette différence entre les valeurs d'enthalpie de cristallisation peut être expliquée par la trop grande vitesse de refroidissement appliquée au moule, pour pouvoir respecter le temps de cycle de 2 minutes. Par ailleurs, les variations de la température d'un point à l'autre du moule se traduisent par des variations de cristallisation de la résine (cf tableau 1).

### Exemple 2 selon l'invention :

Une fibreuse est introduite dans un moule de CRTM, à parois minces de 3mm d'épaisseur en acier, positionné hors de la presse. Ce moule est ensuite fermé et maintenu fermé au moyen d'un système de tirage sous vide constitué d'une pompe et d'un tuyau relié à plusieurs évents positionnés tout autour de la préforme. Le moule à parois minces est ensuite transféré dans une matrice préalablement préchauffée à 300°C, installée sur une presse. Après un temps de maintien de 30 secondes, la température du moule à parois minces atteint la température de la matrice chauffante. La composition réactive utilisée est la même que celle décrite à l'exemple 1. La composition réactive est alors injectée en 5 secondes dans la chambre de compression du moule à paroi minces. Au moyen de la presse, une pression de 50 bars est appliquée sur le moule, ce qui permet de fermer en 5 secondes, ladite chambre de compression et d'imprégner la préforme fibreuse.

Après la phase de compression, un maintien en température de 1 minute à 300°C est effectué, puis la pression est réduite à 5 bars et le tirage sous vide est remis en service. La presse s'ouvre et le moule à parois minces est retiré de la matrice chauffante au moyen d'un bras robotisé, puis déposé dans un carrousel qui tourne jusqu'à ce qu'un second moule à parois minces ne comportant que la préforme en fibres de verre soit positionné à proximité de la presse, puis positionné dans la matrice chauffante, à la place du premier moule, pour recevoir la composition réactive. Le carrousel dispose de 5 emplacements pour les moules.

Le temps de cycle est de 2 minutes : 30 secondes de chauffage du moule à parois mince + 1 minute de maintien sous presse le temps de la polymérisation et de l'imprégnation des fibres de verre + 30 secondes de temps de manutention pour le chargement et le déchargement du moule.

Le premier moule à parois minces est ensuite retiré du carrousel au moyen d'un bras robotisé et placé dans un conformateur froid. Celui-ci est maintenu à la température de 220°C, ce qui lui permet de refroidir le moule à parois minces. Ce conformateur permet également d'appliquer une pression résiduelle de 5 bars pendant toute la phase de refroidissement du moule à parois minces. Une fois que le moule à parois minces atteint la température de 220°C, ce qui se produit après un refroidissement de 10 minutes, il est retiré du conformateur froid puis ouvert et la pièce composite est démoulée.

Le coût énergétique de ce cycle moulage est divisé par 10 par rapport au cycle décrit dans l'exemple 1.

Le temps de cristallisation de la résine lors du refroidissement est considérablement allongé, tout en conservant un temps de cycle similaire, ce qui se traduit par une meilleure polymérisation et une meilleure cristallisation de la résine (cf tableau 1).

Les températures relevées d'un point à l'autre du moule et les calculs thermiques indiquent une variation de +/-2°C, ce qui est très proche des variations obtenues pour un moule purement isotherme.

Les prélèvements du matériau composite préparé dans les zones 31, 32 et 33 indiquées sur la figure 3, permettent de constater un avancement similaire de la réaction de polymérisation : une masse molaire similaire, en tout point du moule et une bonne homogénéité de la cristallisation (cf tableau 1).

**[Tableau 1] : mesures de masse molaires par RMN et de cristallisation par DSC, dans les zones 1,2 et 3 de la pièce, pour les 2 types de cycle de moulage.**

| Type de moulage | Point de prélèvement | Masse molaire (Mn, g/mol) | Enthalpie de cristallisation (kJ/g) |
|---|---|---|---|
| Exemple 1 (comparatif) | 31 | 9000 | 13 |
| | 32 | 12500 | 20 |
| | 33 | 11200 | 18 |
| Exemple 2 (invention) | 31 | 18000 | 30 |
| | 32 | 19100 | 32 |
| | 33 | 18600 | 31 |

## Revendications

1. Procédé de fabrication d'une pièce en matériau composite, ledit matériau comprenant des fibres de renfort et une matrice polymère, le procédé comprenant les étapes successives suivantes :
- installation dans une matrice montée sur une presse (12) d'un moule à parois minces (11) fermé dans lequel ont été disposées des fibres de renfort,
- fermeture de la presse (12),
- injection à l'état fondu dans le moule à parois minces fermé (11) d'un polymère ou d'une composition réactive comprenant au moins un prépolymère, au moins un monomère ou leurs mélange,
- maintien de la fermeture de la presse (12) pendant tout ou partie de la polymérisation de la matrice polymère, lorsqu'une composition réactive est utilisée,
- ouverture de la presse (12)
- retrait du moule à parois minces (11) de la presse (12), tout en maintenant une pression résiduelle comprise entre 0,7 et 10 bars, de préférence entre 0,7 et 5 bars, dans ledit moule (11),
- refroidissement du moule (11) sous ladite pression résiduelle.

2. Procédé selon la revendication 1, **caractérisé en ce que** le moule à parois minces (11) est muni d'un système de tirage sous vide permettant une dépression de 0,7 bar à 0,9 bar.

3. Procédé selon la revendication 1 ou 2, **caractérisé en ce que** la matrice de la presse (12) est maintenue à une température constante comprise entre 250°C et 320°C.

4. Procédé selon l'une quelconque des revendications précédentes, **caractérisé en ce que** l'étape de refroidissement consiste à refroidir ledit moule (11) par conduction thermique avec l'air environnant au travers de ses parois minces, à température inférieure à la température de cristallisation (Tc) du polymère formé sous une pression résiduelle comprise entre 0,7 et 10 bars, de préférence comprise entre 0,7 et 5 bars.

5. Procédé selon l'une quelconque des revendications 1 à 3, **caractérisé en ce que** l'étape de refroidissement consiste à disposer le moule à parois minces (11) dans un conformateur, dit froid, (15) régulé à une température inférieure ou égale à la température de cristallisation du polymère formé sous une pression résiduelle comprise entre 0,7 et 10 bars, de préférence comprise entre 0,7 et 5 bars.

6. Procédé selon l'une quelconque des revendications précédentes, **caractérisé en ce que**, après l'étape de refroidissement, le procédé comprend une étape de démoulage du matériau composite du moule à parois minces (11).

7. Procédé selon l'une quelconque des revendications précédentes, **caractérisé en ce que**, lorsque l'étape d'injection est réalisée avec une composition réactive, alors la polymérisation de la composition réactive est réalisée en présence de dégazage, de préférence, le dégazage étant effectué par l'application d'une dépression allant de 0,010 à 0,950 bar, de préférence de 0,700 à 0,900 bar par rapport à la pression atmosphérique.

8. Procédé selon l'une quelconque des revendications précédentes, caractérisé en ce l'étape de maintien de la fermeture de la presse (12) pendant tout ou partie de la polymérisation est réalisée avec une compression du moule (11), de préférence à une pression allant de 10 à 70 bars, encore plus préférentiellement de 40 à 60 bars.

9. Procédé selon l'une quelconque des revendications précédentes, **caractérisé en ce que** la matrice polymère est choisie parmi les matrices polyamide, polyester, polyamide-imide, polyamide-éther, polyacrylique, polyoléfines, polysulfure de phénylène, polyéther-imide, de préférence une matrice polyamide.

10. Procédé selon l'une quelconque des revendications précédentes, **caractérisé en ce que** lesdites fibres de renfort sont sélectionnées parmi les fibres minérales, de préférence de verre, de carbone ou de basalte, en particulier de verre ou de carbone, ou parmi les fibres synthétiques, de préférence les fibres d'aramides ou de polyaryl éther cétones, ou parmi les mélanges de celles-ci ; et/ou dans lequel les fibres de renfort présentent un rapport L/D supérieur à 1000, de préférence supérieur à 2000, L étant la longueur moyenne des fibres et D leur diamètre moyen.

11. Moule (1) comportant deux pièces destinées à être assemblées, **caractérisé en ce qu'**il se constitue
- d'une première pièce (3) comportant une rainure (7) sur tout le pourtour de la pièce,
- d'une seconde pièce (2) comportant une nervure en saillie (4) sur tout le pourtour de la pièce,
les positions de la rainure (7) et de la nervure (4) étant choisies de manière à ce qu'elles s'emboîtent lorsque le moule est en position fermée,
- au moins l'une des pièces comporte au moins un orifice (5) (6), présentant un axe perpendiculaire à la surface de la pièce,
- un joint (8) est positionné dans la rainure (7) de la première pièce (3),
- les pièces étant d'une épaisseur supportant une pression de moulage résiduelle supérieure à la pression de vapeur saturante de l'eau à la température d'injection de la composition réactive et
- les pièces présentant des propriétés de conduction thermiques,
le moule étant équipé d'un système de tirage sous vide permettant de le maintenir en position fermée.

12. Moule selon la revendication 11 , **caractérisé en ce qu'**il est équipé d'un canal de refroidissement permettant de refroidir le joint positionné (8) dans la rainure (7) de la première pièce (3).

13. Utilisation du moule tel que défini à la revendication 11 ou 12 pour la fabrication de matériau composite.

14. Dispositif circulaire disposé sur un axe de rotation comportant plusieurs zones de stockage de forme identique, ladite forme étant complémentaire de la forme d'une pièce d'un moule (1) tel que défini à la revendication 11 ou 12.

## Patentansprüche

1. Verfahren zur Herstellung eines Teils aus Verbundmaterial, das Material umfassend Verstärkungsfasern und eine Polymermatrix, das Verfahren umfassend die folgenden aufeinanderfolgenden Schritte:
- Installation in einer auf einer Presse (12) montierten Matrize einer geschlossenen dünnwandigen Form (11), in der Verstärkungsfasern angeordnet wurden,
- Schließen der Presse (12),
- Schmelzinjektion eines Polymers oder einer reaktiven Zusammensetzung, umfassend mindestens ein Präpolymer, mindestens ein Monomer oder ein Gemisch davon, in die geschlossene dünnwandige Form (11),
- Aufrechterhalten des Verschlusses der Presse (12) während der gesamten oder eines Teils der Polymerisation der Polymermatrix, wenn eine reaktive Zusammensetzung verwendet wird,
- Öffnen der Presse (12),
- Abnehmen der dünnwandigen Form (11) aus der Presse (12), während ein Restdruck zwischen 0,7 und 10 bar, vorzugsweise zwischen 0,7 und 5 bar, in der Form (11) aufrechterhalten wird,
- Abkühlen der Form (11) unter dem genannten Restdruck.

2. Verfahren nach Anspruch 1, **dadurch gekennzeichnet, dass** die dünnwandige Form (11) mit einem Vakuumabzugsystem versehen ist, das einen Unterdruck von 0,7 bar bis 0,9 bar ermöglicht.

3. Verfahren nach Anspruch 1 oder 2, **dadurch gekennzeichnet, dass** die Matrize der Presse (12) auf einer konstanten Temperatur zwischen 250 °C und 320 °C gehalten wird.

4. Verfahren nach einem der vorherigen Ansprüche, **dadurch gekennzeichnet, dass** der Kühlschritt darin besteht, die Form (11) durch thermische Leitung mit der umgebenden Luft durch ihre dünnen Wände auf eine Temperatur unterhalb der Kristallisationstemperatur (Tc) des gebildeten Polymers unter einem Restdruck zwischen 0,7 und 10 bar, vorzugsweise zwischen 0,7 und 5 bar, zu kühlen.

5. Verfahren nach einem der Ansprüche 1 bis 3, **dadurch gekennzeichnet, dass** der Kühlschritt darin besteht, die dünnwandige Form (11) in einem sogenannten kalten Former (15) anzuordnen, der auf eine Temperatur reguliert wird, die niedriger als oder gleich wie die Kristallisationstemperatur des gebildeten Polymers ist, unter einem Restdruck zwischen 0,7 und 10 bar, vorzugsweise zwischen 0,7 und 5 bar.

6. Verfahren nach einem der vorherigen Ansprüche, **dadurch gekennzeichnet, dass** das Verfahren nach dem Schritt eines Abkühlens einen Schritt eines Entformens des Verbundmaterials aus der dünnwandigen Form (11) umfasst.

7. Verfahren nach einem der vorherigen Ansprüche, **dadurch gekennzeichnet, dass**, wenn der Injektionsschritt mit einer reaktiven Zusammensetzung durchgeführt wird, dann die Polymerisation der reaktiven Zusammensetzung in Anwesenheit von Entgasung durchgeführt wird, vorzugsweise wobei die Entgasung durch Anlegen eines Unterdrucks von 0,010 bis 0,950 bar, vorzugsweise von 0,700 bis 0,900 bar, im Vergleich zu Atmosphärendruck erfolgt.

8. Verfahren nach einem der vorherigen Ansprüche, **dadurch gekennzeichnet, dass** der Schritt eines Aufrechterhaltens des Verschlusses der Presse (12) während der gesamten oder eines Teils der Polymerisation mit einer Kompression der Form (11), vorzugsweise bei einem Druck von 10 bis 70 bar, noch bevorzugter von 40 bis 60 bar, durchgeführt wird.

9. Verfahren nach einem der vorherigen Ansprüche, **dadurch gekennzeichnet, dass** die Polymermatrix ausgewählt ist aus Polyamid-, Polyester-, Polyamid-Imid-, Polyamid-Ether-, Polyacryl-, Polyolefin-, Polyphenylensulfid-, Polyether-Imid-Matrizen, vorzugsweise einer Polyamidmatrize.

10. Verfahren nach einem der vorherigen Ansprüche, **dadurch gekennzeichnet, dass** die Verstärkungsfasern ausgewählt sind aus Mineralfasern, vorzugsweise Glas-, Kohlenstoffoder Basaltfasern, insbesondere Glas- oder Kohlenstofffasern, oder aus synthetischen Fasern, vorzugsweise Aramid- oder Polyaryletherketonfasern, oder aus Gemischen davon; und/oder wobei die Verstärkungsfasern ein UD-Verhältnis von mehr als 1000, vorzugsweise mehr als 2000, aufweisen, wobei L die durchschnittliche Länge der Fasern und D ihr durchschnittlicher Durchmesser ist.

11. Form (1), umfassend zwei Teile, die dazu bestimmt sind, zusammengesetzt zu werden, **dadurch gekennzeichnet, dass** sie aus Folgendem besteht
- einem ersten Teil (3), umfassend eine Nut (7) über den gesamten Umfang des Teils,
- einem zweiten Teil (2), umfassend eine hervorstehende Rippe (4) über den gesamten Umfang des Teils,
wobei die Positionen der Nut (7) und der Rippe (4) gewählt sind, damit sie ineinandergreifen, wenn die Form in der geschlossenen Position ist,
- mindestens eines der Teile mindestens eine Öffnung (5) (6) umfasst, die eine Achse senkrecht zu der Oberfläche des Teils aufweist,
- eine Dichtung (8) in der Nut (7) des ersten Teils (3) positioniert ist,
- die Teile eine Stärke haben, die einem Restformdruck standhält, der höher ist als der Sättigungsdampfdruck von Wasser bei der Einspritztemperatur der reaktiven Zusammensetzung, und
- die Teile wärmeleitende Eigenschaften aufweisen,
die Form mit einem Vakuumzugsystem ausgestattet ist, mit dem sie in geschlossener Position gehalten werden kann.

12. Form nach Anspruch 11, **dadurch gekennzeichnet, dass** sie mit einem Kühlkanal ausgestattet ist, der es ermöglicht, die in der Nut (7) des ersten Teils (3) positionierte Dichtung (8) zu kühlen.

13. Verwendung der Form wie definiert in Anspruch 11 oder 12 zur Herstellung von Verbundmaterial.

14. Kreisförmige Vorrichtung, die auf einer Drehachse angeordnet ist und mehrere identisch geformte Speicherbereiche umfasst, wobei die Form komplementär zu der Form eines Teils einer Form (1) wie definiert in Anspruch 11 oder 12 ist.

## Claims

1. A method for manufacturing a part made of composite material, said material comprising reinforcing fibers and a polymer matrix, the method comprising the following successive steps:
- installing into a matrix mounted on a press (12) a closed thin-walled mold (11) wherein reinforcing fibers have been arranged,
- closing the press (12),
- injecting in the molten state into the closed thin-walled mold (11) a polymer or a reactive composition comprising at least one prepolymer, at least one monomer or their mixture,
- maintaining the closing of the press (12) for all or part of the polymerization of the polymer matrix, when a reactive composition is used,
- opening the press (12)
- removing the thin-walled mold (11) from the press (12), while maintaining a residual pressure between 0.7 and 10 bar, preferably between 0.7 and 5 bar, in said mold (11),
- cooling the mold (11) under said residual pressure.

2. The method according to claim 1, **characterized in that** the thin-walled mold (11) is provided with a vacuum filling system facilitating a pressure of 0.7 bar to 0.9 bar.

3. The method according to claim 1 or 2, **characterized in that** the matrix of the press (12) is maintained at a constant temperature between 250°C and 320°C.

4. The method according to any one of the preceding claims, **characterized in that** the cooling step consists in cooling said mold (11) via thermal conduction with the surrounding air through its thin walls, to a temperature less than the crystallization temperature (Tc) of the polymer formed under a residual pressure between 0.7 and 10 bar, preferably between 0.7 and 5 bar.

5. The method according to any one of claims 1 to 3, **characterized in that** the cooling step consists in positioning the thin-walled mold (11) in a so-called cold forming machine (15) regulated at a temperature less than or equal to the crystallization temperature of the polymer formed under a residual pressure between 0.7 and 10 bar, preferably between 0.7 and 5 bar.

6. The method according to any one of the preceding claims, **characterized in that**, after the cooling step, the method comprises a demolding step of the composite material from the thin-walled mold (11).

7. The method according to any one of the preceding claims, **characterized in that**, when the injection step is carried out with a reactive composition, then the polymerization of the reactive composition is carried out in the presence of degassing, preferably, the degassing being carried out by the application of a vacuum ranging from 0.010 to 0.950 bar, preferably from 0.700 to 0.900 bar with respect to the atmospheric pressure.

8. The method according to any one of the preceding claims, **characterized in that** the step for maintaining the closure of the press (12) for all or part of the polymerization is carried out with compression of the mold (11), preferably at a pressure ranging from 10 to 70 bar, even more preferentially from 40 to 60 bar.

9. The method according to any one of the preceding claims, **characterized in that** the polymer matrix is selected from polyamide, polyester, polyamide-imide, polyamideether, polyacrylic, polyolefin, phenylene polysulfide, polyether-imide matrices, preferably a polyamide matrix.

10. The method according to any one of the preceding claims, **characterized in that** said reinforcing fibers are selected from mineral fibers, preferably glass, carbon or basalt fibers, in particular glass or carbon fibers, or from synthetic fibers, preferably aramid fibers or polyaryletherketone fibers, or from the mixtures thereof; and/or in which the reinforcing fibers have an L/D ratio greater than 1,000, preferably greater than 2,000, L being the mean length of the fibers and D their mean diameter.

11. A mold (1) comprising two parts intended to be assembled, **characterized in that** it consists of
- a first part (3) comprising a groove (7) around the entire edge of the part,
- a second part (2) comprising a protruding rib (4) around the entire edge of the part,
the positions of the groove (7) and of the rib (4) being selected so that they fit together when the mold is in the closed position,
- at least one of the parts comprises at least one orifice (5) (6), having a perpendicular axis to the surface of the part,
- a seal (8) is positioned in the groove (7) of the first part (3),
- the parts being of a thickness that withstands a residual molding pressure greater than the saturated vapor pressure of water at the injection temperature of the reactive composition and
- the parts having heat conductive properties,
the mold being equipped with a vacuum filling system making it possible to maintain it in the closed position.

12. The mold according to claim 11, **characterized in that** it is equipped with a cooling channel making it possible to cool the seal positioned (8) in the groove (7) of the first part (3).

13. The use of the mold as defined in any one of claims 11 or 12 for the manufacture of composite material.

14. A circular device arranged on an axis of rotation comprising several storage zones of identical shape, said shape being complementary to the shape of a part of a mold, said shape being complementary to the shape of a part of a mold (1) as defined in claim 11 or 12.
